(19) Europäisches Patentamt
European Patent Office
Office européen des brevets

(11) **EP 4 249 322 A1**

(12) **EUROPEAN PATENT APPLICATION**

(43) Date of publication:
**27.09.2023 Bulletin 2023/39**

(21) Application number: **22164353.9**

(22) Date of filing: **25.03.2022**

(51) International Patent Classification (IPC):
**B60M 1/234** (2006.01)

(52) Cooperative Patent Classification (CPC):
**B60M 1/234**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Mosdorfer GmbH**
**8160 Weiz (AT)**

(72) Inventor: **Maffioletti, Paolo**
**24124 Bergamo (IT)**

(74) Representative: **Patentanwälte**
**Barger, Piso & Partner**
**Operngasse 4**
**1010 Wien (AT)**

(54) **DROPPER WITH A SPRING-DAMPER ELEMENT FOR OVERHEAD LINES**

(57) The invention relates to a dropper for catenary wires has a spring-damper element, the spring and the damping element not being positively connected to one another, as a result of which, after a pure spring travel, an impact head comes into contact with the damping element, which damps the vibrations of the catenary wire.

Fig. 2

EP 4 249 322 A1

**Description**

The invention relates to a dropper for overhead lines with a spring-damper element comprising a spring and a damping element according to the characterizing part of claim 1.

Droppers for overhead lines are known in numerous embodiments from the prior art. In their simplest form, they consist of wire ropes and connecting components (clamps, possibly also thimbles and pressing sleeves), which are tensioned between the contact wire and the suspension wire. Thus the droppers permit the possibility to decrease the distance between the contact wire and the suspension wire while preventing an increase. In this context, catenary and messenger wire systems are used synonymously for each other and are understood to be the general concept, known to those skilled in the art, of an overhead contact line structure consisting of a contact wire, a suspension cable and droppers positioned between them.

DE 628 560 C shows an improved dropper compared to the rigid element, in which a spring element is connected in parallel with a hydraulic, air-filled damper element. The disadvantages of this are the complicated design of the spring-damper element, which requires very precise axial alignment, and the high temperature dependence of the damping properties of air damping. Another problem is the response behavior when the pantograph is distanced from the contact wire, since the permanent damping can lead to a loss of contact and thus arcing, which can cause damage. On the other hand, the permanent damping of the dropper can lead to increased pressure on the contact wire when the pantograph is raised.

DE 909 465 C shows two designs of a dropper. The first design is a damping element damped purely by solid-state friction. The disadvantage of this is on the one hand the wear of the element due to mechanical friction, and on the other hand the jerky response behavior. In this case, the energy dissipation is not continuous, but occurs in a staircase-like manner when the adhesion limit of the two friction bodies is exceeded. This solution is particularly disadvantageous because, on the one hand, additional high-frequency vibrations can be induced and, on the other hand, damping inevitably occurs here as well once the threshold value is exceeded. The second dropper form shown is similar to the design of DE 628 560 C, with the difference that the structure has been simplified. In the first case, the damping path is not reversible by the element itself, in the second case only to a small extent. The problems of permanent damping from DE 628 560 C basically remain. The difficulties with the temperature dependence of the damping also remain unchanged.

There is therefore a need for a dropper with a spring-damper element for overhead lines which permits rapid response to a change in the contact pressure of the pantograph on the contact wire, whose damping has low temperature dependence and only needs little maintenance.

According to the invention, this is achieved by a dropper having the features indicated in the characterizing part of claim 1. In other words, a dropper for catenary wires has a spring-damper element, the spring and the damping element not being positively connected to one another, as a result of which, after a pure spring travel, an impact head comes into contact with the damping element, which damps the vibrations of the catenary wire.

The invention is explained in more detail below with reference to the drawings of an embodiment. Thereby the

Fig. 1 shows an embodiment of a dropper according to the invention with a spring-damper element with a tension spring in assembled state, the

Fig. 2 shows a design of a dropper according to the invention with a spring-damper element with a tension spring in the open state, the

Fig. 3 shows a schematic longitudinal section in vertical direction of a dropper according to the invention with a spring-damper element with a tension spring shows the dropper in installed condition between the suspension cable and the contact wire,

Fig. 4 shows an embodiment of a dropper according to the invention with a spring-damper element with a compression spring in assembled state, the

Fig. 5 shows a design of a dropper according to the invention with a spring-damper element with a compression spring in the open state, the

Fig. 6 shows a schematic longitudinal section in vertical direction of a dropper according to the invention with a spring-damper element with a compression spring shows the dropper in installed condition between the suspension cable and the contact wire and the

Fig. 7 a damping element from Fig. 2 and Fig. 6.

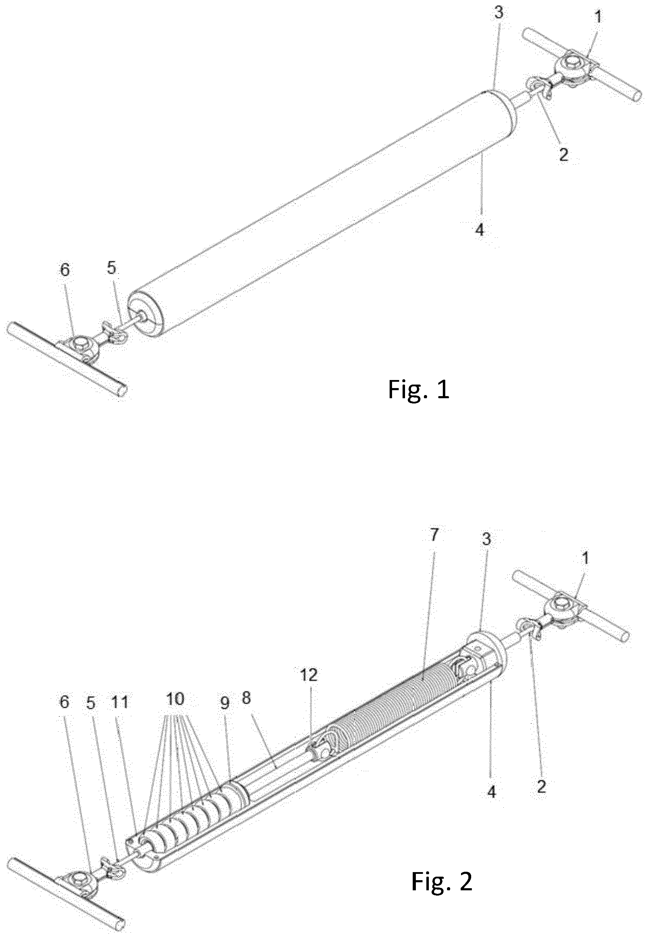

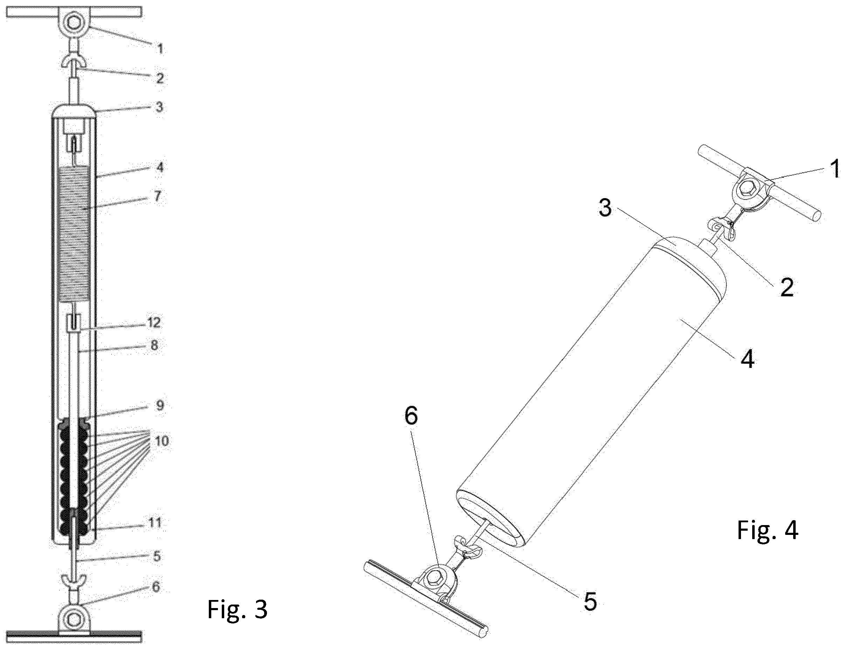

Fig. 1 shows a possible embodiment of a dropper according to the invention, with a suspension cable clamp 1, an upper connecting cable 2, a housing top 3, a shell 4, a lower connecting cable 5 and a contact wire clamp 6. In usual use, the dropper according to the invention is in a vertical orientation (cf. Fig. 3). The upper clamp is then the suspension cable clamp 1, which is positively and/or frictionally connected to a suspension cable. Below the suspension cable clamp 1 is then the connecting cable 2, which connects the suspension cable clamp 1 to the housing top 3. The upper housing cover sits above the shell 4 of the dropper, with the shell 4 containing the housing of the spring-damper system. At the bottom, the lower connecting cable 5 protrudes from the housing within the shell 4 and is connected to the contact wire clamp 6, which in turn is positively and/or frictionally connected to a contact wire. It has proven advantageous to design cables 2 and 5 as cables due to their axial flexibility, but for special applications it is also possible to design them as rods.

Fig. 2 shows an embodiment of a dropper according to the invention with a spring-damper element, analogous to Fig. 1, with a suspension cable clamp 1, an upper connecting cable 2, a housing top 3, a shell 4, a lower connecting cable 5, a contact wire clamp 6, a tension spring 7, a rod 8, an impact cap 9, damping rings 10, a housing 11 and an impact head 12. The spring 7 is connected to the housing top 3 and the rod 8 via the impact head 12. The rod 8 in turn passes through the holes in the impact cap 9 and the damping rings 10. At the lower end of the rod 8, it is connected to the connecting cable 5, which leads to the contact wire clamp 6. In working condition the housing 11 is closed and covered by the shell 4.

Fig. 3 shows a simplified schematic representation of a dropper according to the invention with a spring-damper element with a tension spring in the suspended position as a longitudinal section analogous to Fig. 1 and Fig. 2. The axial subdivision of the housing 11, which is necessary to prevent the impact cap 9 from moving axially in the direction of the spring, becomes clear. In the other direction, the position is secured by the damping rings 10. When damping rings 10 are installed, a preload is applied, which serves to improve the fit of the damping elements 10. For particularly sensitive applications, this tuning must be performed by individual measurements of the preload force. During dropper damper installation in catenary it is necessary to have the spring at the right elongation to have the rod 8 in touch with impact cap 9, this correct preload can easily be achieved, for example, by means of markings on rod 8 or cable 5 to fix the clamp 6 on catenary contact wire. It can also be seen here that the damping properties of the damping rings 10 do not depend exclusively on the material properties, but also on their shape. The shape shown in Fig. 3 resembles that of a crescent in the broadest sense, thus allowing the damping elements 10 to be stacked one on top of the other. If the contact wire and thus the contact wire clamp 6 are now deflected strongly, the spring 7 is subjected to a strong tensile load and the rod 8 moves in direction to damping rings 10. At a certain deflection of the spring 7, the wider upper end of the rod 8, the impact head 12, strikes the impact cap 9, which transfers the momentum to the damping rings 10, thus achieving a damping effect. The length of the pure spring travel until the impact head 12 strikes the impact cap 9 depends on the requirements of the application and can be easily dimensioned by a person skilled in the art, knowing the invention.

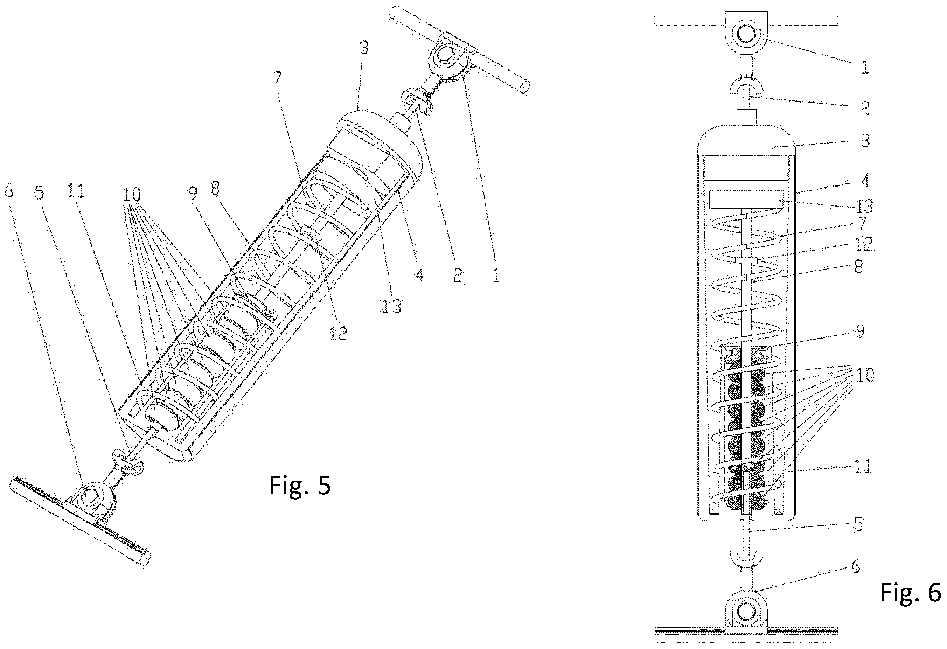

Fig. 4 shows another possible embodiment of a dropper according to the invention, with a suspension cable clamp 1, an upper connecting cable 2, a housing top 3, a shell 4, a lower connecting cable 5 and a contact wire clamp 6. In usual use, the dropper according to the invention is in a vertical orientation (cf. Fig. 6). The upper clamp is then the suspension cable clamp 1, which is positively and/or frictionally connected to a suspension cable. Below the suspension cable clamp 1 is then the connecting cable 2, which connects the suspension cable clamp 1 to the housing top 3. The upper housing cover sits above the shell 4 of the dropper, with the shell 4 containing the housing of the spring-damper system. At the bottom, the lower connecting cable 5 protrudes from the housing within the shell 4 and is connected to the contact wire clamp 6, which in turn is positively and/or frictionally connected to a contact wire. It has proven advantageous to design cables 2 and 5 as cables due to their axial flexibility, but for special applications it is also possible to design them as rods.

Fig. 5 shows an embodiment of a dropper according to the invention with a spring-damper element, analogous to Fig. 4, with a suspension cable clamp 1, an upper connecting cable 2, a housing top 3, a shell 4, a lower connecting cable 5, a contact wire clamp 6, a compression spring 7, a rod 8, an impact cap 9, damping rings 10, a housing 11, an impact head 12 and a rod disc 13. The spring 7 is clamped in the housing 11 between the lower part of the housing 11 and the rod disc 13. The rod 8 starts from the rod disc 13, then passes through the center of the spring and on through the holes in the striking cap 9 and the damping rings 10, which are clamped between the lower part of the housing 11 and the striking cap 9. In the upper part of the rod 8 there is the impact head 12, while at the lower end of the rod 8, it is connected to the connecting cable 5, which leads to the contact wire clamp 6. In working condition the housing 11 is closed and covered by the shell 4.

Fig. 6 shows a representation of a dropper according to the invention with a spring-damper element with a compression spring in the suspended position as a longitudinal section analogous to Fig. 4 and Fig. 5. It can be seen that in this embodiment, the housing 11 has a tubular structure in the lower part which is used to house the damping rings 10 and the impact cap 9, thereby preventing slippage during use. When damping rings 10 are installed, a preload is applied, which serves on the one hand to improve the fit of the damping elements 10. The process is similar to the one of Fig. 3, therefore, all statements made there are also valid here, the same applies mutatis mutandis to the explanations concerning the spring 7 when installing the dropper. If the contact wire and thus the contact wire clamp 6 are deflected strongly, the spring 7 is subjected to a strong compressive load and the rod 8 moves in direction of the damping rings 10. At a certain compression of the spring 7 the impact head 12 strikes the impact cap 9, which transfers the momentum to the damping rings 10, thus achieving a damping effect. The length of the pure spring travel until the impact head 12 strikes the impact cap 9 depends on the requirements of the application and can be easily dimensioned by a person skilled in the art, knowing the invention.

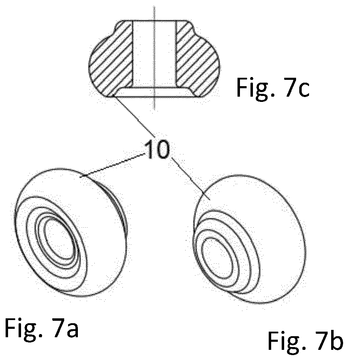

Fig. 7 shows one of the damping rings 10 from Fig. 2 and Fig. 3, respectively, where Fig. 7a shows an isometric view from below, Fig. 7b shows an isometric view from above, and Fig. 7c shows a cross-section of the element. This representation of the damping elements 10 represents a particularly advantageous design. The damping elements 10 shown are rotationally symmetrical bodies. Because the protrusion (at the top in Fig. 7c) of one damping element fits into the recess of the next damping element (at the bottom in Fig. 7c), these elements can be easily stacked on top of each other. Under compressive load, i.e., when the impact head 12 strikes the impact cap 9 and subsequently the damping elements 10, this causes both a certain amount of friction between the damping elements 10 and a spreading of the damping elements 10. The bulge of the damping elements 10, the outermost points of which represent the points of the damping element furthest from the axis of rotation, thus rest on the housing 11 and are pressed down by the impact head 12 and subsequentially the impact cap 9. This results in damping that has a hysteresis. Of course it is also possible to use non-symmetrical damping elements 10 if they prove to be beneficial for the desired application.

For the connection between the tension spring 7 and the housing top 3 or the rod 8, all connections known to be suitable from the prior art can be considered. For example, it is possible to weld, screw or rivet the tension spring 7 to the housing top 3 or the rod 8. In general, connections such as rivets or screwed connections that allow some pivoting movement are advantageous, as this reduces the risk of wedging during movement.

For the connection between rod 8 and connecting cable 5, all connections known to be suitable from the prior art can also be considered. For example, it is possible to join the connections thermally (press fit due to temperature differences during joining, which of course is only possible if the cable 5 is no cable, but a rod), to glue them together, to screw them together or the like. Furthermore, it is possible to make rod 8 and connecting rod 5 in one piece. For the connection between suspension cable clamp 1 and upper connecting cable 2 and between connecting cable 5 and contact wire clamp 6, connections that allow a certain change in the angle between suspension cable and dropper, or contact wire and dropper, are particularly suitable. In the embodiment shown, the connection between the clamps and connecting cables is made by means of thimbles. This type of connection is advantageous because it greatly reduces or even prevents the introduction of bending stress into the suspension rope and contact wire. The connection options listed are to be understood as an indication for the person skilled in the art and are by no means to be regarded as an exhaustive list - however, connections without thimbles are also possible, as they are known from the prior art (e.g. pressing).

In principle, all materials and shapes that can withstand the mechanical stress and have the desired damping properties can be used for the impact cap 9. Thus, in the case shown, plastic (PA6) is used for the impact cap 9, but it would theoretically also be possible to use a metal for it, provided it proves favorable for the damping properties. Different rubber compounds are used for the damping rings 10 whose damping properties can be adapted to the particular application. For the example shown a synthetic polymer was used, but other materials known from the prior art are also possible. The basic damping characteristics are application-related and can be understood by a person skilled in the art who is familiar with the invention via the calculation model of a mass oscillator of the form

$$m\ddot{x} + d\dot{x} + cx = F$$

can be calculated. Where x is the deflection and $\dot{x}$ or $\ddot{x}$ their derivatives, m is the oscillating mass, c is the spring constant of the system and d is the damping constant of the system. Since the shape of the damping rings 10 also plays an important role, the pure material properties must always be considered in the context of the shape of the damping rings 10. For example, toroidal-shaped damping rings 10 have different spring-damping properties than the broadly crescent-shaped damping rings 10 shown. Matching shape and material properties to the desired damping properties of the damping rings 10 is easily accomplished by a person skilled in the art through his or her expertise, if necessary in combination with simple supplementary tests. Several test series with different rubber compounds were carried out for the shown tension spring design, the damping test machine was equipped with a load cell type HBM U2A and a linear variable resistor type HBM V50. The test data and results were as follows:

| | Spacer damper rubber GB55 | | | |
|---|---|---|---|---|
| Peak to peak motion mm | 5,2 | 10 | 15,4 | 20,8 |
| Area isteresi V^2 | 1,47 | 6,42 | 7,6 | 5,27 |
| Peak force Kg | 8,24 | 14,52 | 24,24 | 35,60 |
| ENERGY J | 0,05768 | 0,25192 | 0,59645 | 1,03397 |
| Stiffness K N/m | **15575,03** | **14244,12** | **15441,19** | **16790,19** |

(continued)

| | Spacer damper rubber GB55 | | | |
|---|---|---|---|---|
| Damping H | **0,02189** | **0,02816** | **0,02594** | **0,02267** |

| | Special rubber type S | | | |
|---|---|---|---|---|
| Peak to peak motion mm | 5,02 | 10,3 | 15,4 | 21,2 |
| Area isteresi V^2 | 0,995 | 5,22 | 10,5 | 4,59 |
| Peak force Kg | 4,24 | 9,12 | 13,52 | 20,20 |
| ENERGY J | 0,03904 | 0,20483 | 0,41202 | 0,90056 |
| Stiffness K N/m | **8285,74** | **8686,14** | **8612,42** | **9347,26** |
| Damping H | **0,02978** | **0,03540** | **0,03212** | **0,034140** |

| | Special rubber type N | | | |
|---|---|---|---|---|
| Peak to peak motion mm | 5,05 | 10,1 | 15,3 | 20,4 |
| Area isteresi V^2 | 1,08 | 0,89 | 1,76 | 1,27 |
| Peak force Kg | 1,92 | 4,08 | 5,40 | 8,04 |
| ENERGY J | 0,04238 | 0,03504 | 0,06906 | 0,09967 |
| Stiffness K N/m | **3729,74** | **3962,85** | **3462,35** | **3866,29** |
| Damping H | **0,07095** | **0,01380** | **0,01357** | **0,00986** |

As can be seen in the above tables, there are numerous possibilities for adapting the invention, making different designs possible, depending on the application. Knowing the invention, these adaptations can be carried out easily and quickly by a person skilled in the art.

When the spring 7 is stressed, friction occurs to a certain extent, between on the one hand the damping rings 10 as well as the impact cap 9 and on the other hand presumably the rod 8, whereby the extent can be adjusted via the bore diameter of the damping rings 10 as well as the impact cap 9. In the preferred embodiments, the friction between the damping rings 10 as well as the impact cap 9 and the rod 8 is small to the rest of the friction of the system.

A characteristic feature of the invention is that the flexibility provided by the mobility of the spring in undamped motion is combined with the ease of adjustment provided by mechanical damping. In this way, the sinusoidal oscillation of the overhead line which occurs when the pantograph is raised can be successfully suppressed within a short time, since only the negative part of the sinusoidal wave leads to compression of the damping elements 10. In addition to the improved response behavior, this also results in significantly reduced maintenance requirements compared to hydraulic dampers or other damping systems with permanent damping, which leads to longer maintenance intervals and thus lower maintenance costs.

For tension springs the determination of the spring travel in the tension direction depends on the application. For example, a certain pure spring travel in the compression direction of the spring can be provided, but it is also possible to design the dropper so that the spring is fully compressed in the unloaded state. In this case, the state of equilibrium results purely from the weight loading by the cable attached to the bottom of the dropper. For compression springs on the other hand, a certain pure spring travel in the tension direction of the spring can be provided, but it is also possible to design the dropper so that the spring is fully tensioned in the unloaded state. In this case, the state of equilibrium again results purely from the weight loading by the cable attached to the bottom of the dropper.

In principle, all droppers can be replaced with a dropper according to the invention. However, it has proved advantageous to replace in particular the droppers that are closest to the masts of the overhead line with the droppers according to the invention.

In summary, it can be said that the dropper according to the invention for tracked contact lines can be approximately described in the top-direction of the spring element with the rheological model of a Hooke body (i.e. purely elastic) and in the bottom- direction approximately first with the rheological model of a Hooke body and after contact between the impact head 12 and the impact cap 9 with the rheological model of a Kelvin body (i.e. elastic with a dampening).

In the context of this application, "top" always means the side of the dropper that is normally top when installed, i.e., the side with suspension cable clamp 1, while "bottom" always means the side of the dropper that is normally bottom when installed, i.e., the side with contact wire clamp 6.

The prior art cited in this application shall, in jurisdictions where that is possible, become part of the subject application.

List of reference signs:

| | | | |
|---|---|---|---|
| 1 | suspension cable clamp | 8 | rod |
| 2 | upper connecting cable | 9 | impact cap |
| 3 | housing top | 10 | damping rings |
| 4 | shell | 11 | housing |
| 5 | lower connecting cable | 12 | impact head |
| 6 | contact wire clamp | 13 | rod disc |
| 7 | spring | | |

**Claims**

1. Dropper for overhead lines, consisting of a carrier part connected to a suspension cable via a suspension cable clamp (1) and a holding part connected to a contact wire via a contact wire clamp (6), which are movable relative to one another with the interposition of a spring (7) anchored in the carrier part and a damping unit provided therein, **characterized in that** the damping unit consists of at least one damping element (10) of an elastic material and has an impact cap (9) which lies facing an impact head (12), which itself is fastened to the holding part and being in contact with the spring (7), where the impact cap (9) and the impact head (12) being spaced apart when the spring (7) is relaxed.

2. Dropper according to claim 1, **characterized in that** the dropper behaves in one direction purely elastically, and in the other direction, first purely elastically, and after the impact of impact head (12) on impact cap (9), elastically and damped.

3. Dropper according to claim 1 or 2, **characterized in that** the carrier part has a rod (8) passing through the damping unit, which consists of at least one damping element (10) and the impact cap (9).

4. Dropper according to claims 1 to 3, **characterized in that** the impact cap (9) has a hole and impact head (12) has a larger diameter than the hole of the impact cap (9).

5. Dropper according to claim 1 to 4, **characterized in that** the spring (7) is a tension spring.

6. Dropper according to claim 1 to 5, **characterized in that** in the tension direction of the spring (7), after a pure spring travel, the impact head (12) comes into contact with the impact cap (9).

7. Dropper according to claim 1 to 4, **characterized in that** the spring (7) is a compression spring.

8. Dropper according to claim 1 to 4 or 7, **characterized in that** in the compression direction of the spring (7), after a pure spring travel, the impact head (12) comes into contact with the impact cap (9).

9. Dropper according to one of the claims 1 to 8, **characterized in that** the damping elements (10) are made of rubber.

10. Dropper according to one of the claims 1 to 9, **characterized in that** the housing (11) is made of metal.

11. Dropper according to one of the claims 1 to 9, **characterized in that** the housing (11) is made of polymeric or composite material, preferably of PA6.

12. Dropper according to one of the claims 1 to 11, **characterized in that** the shell (4) is made of copper or aluminum.

13. Dropper according to one of the claims 1 to 12, **characterized in that** the cable (5) is made of copper or stainless steel.

**14.** Dropper according to claim one of the claims 1 to 13, **characterized in that** the cable (2) and/or cable (5) is a rod.

Fig. 1

Fig. 2

Fig. 4

Fig. 3

Fig. 6

Fig. 5

Fig. 7c

10

Fig. 7a

Fig. 7b

Europäisches
Patentamt

European
Patent Office

Office européen
des brevets

# EUROPEAN SEARCH REPORT

Application Number

EP 22 16 4353

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H06 171402 A (RAILWAY TECHNICAL RES INST; NITSUPATSU SEIMITSU KOGYO KK; DENGYO KK) 21 June 1994 (1994-06-21)<br>* paragraph [0001] *<br>* paragraph [0010] *<br>* figures 1,2 *<br>----- | 1-14 | INV.<br>B60M1/234 |
| A | EP 1 421 294 B1 (LORD CORP [US]) 13 December 2006 (2006-12-13)<br>* figures 3,4 *<br>----- | 1-14 | |

TECHNICAL FIELDS
SEARCHED        (IPC)

B60M

The present search report has been drawn up for all claims

| Place of search | Date of completion of the search | Examiner |
|---|---|---|
| Munich | 27 September 2022 | Janssen, Axel |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 22 16 4353

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2022

| Patent document cited in search report | | Publication date | Patent family member(s) | | Publication date |
|---|---|---|---|---|---|
| JP H06171402 | A | 21-06-1994 | NONE | | |
| EP 1421294 | B1 | 13-12-2006 | DE | 60216778 T2 | 18-10-2007 |
| | | | EP | 1421294 A1 | 26-05-2004 |
| | | | JP | 4333939 B2 | 16-09-2009 |
| | | | JP | 2003080976 A | 19-03-2003 |
| | | | KR | 20040035728 A | 29-04-2004 |
| | | | KR | 20090125825 A | 07-12-2009 |
| | | | TW | 531602 B | 11-05-2003 |
| | | | TW | 539632 B | 01-07-2003 |
| | | | WO | 03019037 A1 | 06-03-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 628560 C

- DE 909465 C